# EUROPÄISCHE PATENTSCHRIFT

(11) **EP 2 237 000 B1**
(45) Veröffentlichungstag und Bekanntmachung des Hinweises auf die Patenterteilung: **14.06.2017**
(21) Anmeldenummer: 10158463.9
(22) Anmeldetag: 30.03.2010
(51) Int. Cl.: G01G 19/12, G01L 1/20, G01L 1/22, G01G 3/14

(54) **Kraftaufnehmer zur Messung von Stützkräften in einem Abstützelement**
Force transducer for measuring support forces in a support element
Capteur de force destiné à mesurer les forces d'appui dans un élément d'appui

(30) Priorität: 03.04.2009 DE 102009002188
(43) Veröffentlichungstag der Anmeldung: 06.10.2010
(73) Patentinhaber: Tecsis Gmbh, 63073 Offenbach/Main (DE)
(72) Erfinder: Hose von Wolfframsdorff, Joachim, 64665 Alsbach Hähnlein (DE); Jost, Oliver, 63225 Langen (DE); Härle, Klaus, 88138 Hergensweiler (DE); Amendt, Stefan, 63934 Röllbach (DE)
(74) Vertreter: TBK

(56) Entgegenhaltungen:
- EP-A1- 0 338 325
- DE-A1- 19 960 786
- DE-A1-102008 058 758
- US-A- 3 130 578
- Hartmut Fürniß ET AL: "Überlastsicherung basierend auf Dünnfilmtechnologie", 17. Kranfachtagung, , Technische Universitaet Dresden 77) 17. KRANFACHTAGUNG Krane -wirtschaftliche Aspekte und Entwicklungstendenzen 27. Maerz 2009 Einladung und Programm, vol. 17, 1 January 2009 (2009-01-01), pages 77-84, XP055199344, ISBN: 978-3-86-780113-3
- 'Program17. KRANFACHTAGUNG dresden wirtschaftliche Aspekte und Entwicklungstendenzen 27. März 2009 Einladung und Programm' INTERNET ARTICLE, [Online] 27 März 2009, Seite 4 PP., XP055199358 Gefunden im Internet: <URL:http://www.kranfachtagung.de/archiv/20 09-dresden/?file=tl_files/lehnert/pdf/Dresd en-2009/Progr_kft_17_1.pdf> [gefunden am 2015-07-01]

## Beschreibung

Die Erfindung betrifft ein Abstützelement für ein Fahrzeug mit einem Kraftaufnehmer gemäß Oberbegriff von Anspruch 1, zur Erfassung von Stützkräften bei Kranfahrzeugen, fahrbaren Hebezeugen, Bohrfahrzeugen, Selbstfahrlafetten oder dergleichen.

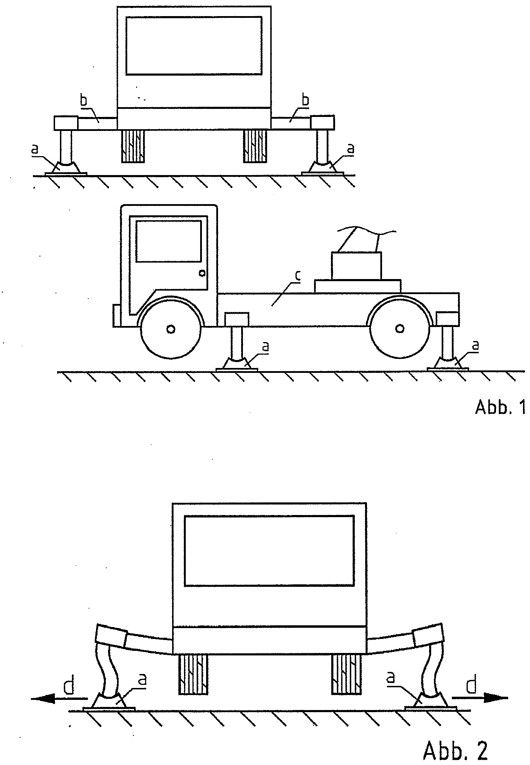

In Abb. 1 ist ein Kranfahrzeug schematisch dargestellt, das zur Sicherung des Stands während des Betriebs auf als Abstützelement dienende Stützfüße **a** gestellt ist. Die Abstützelemente **a** befinden sich in der Regel am Ende von ausziehbaren Trägern **b**, die am Grundrahmen **c** des Fahrzeuges befestigt sind. Am Einsatzort des Krans wird das ganze Fahrzeug hydraulisch mit Hilfe der Abstützelemente angehoben. Die Fahrzeugräder berühren den Boden nicht.

Misst man die über die Abstützelemente vertikal in den Boden übertragenen Kräfte, dann kann man die Gewichtsverteilung und damit den Schwerpunkt des Fahrzeugs
gerade auch beim Heben einer Last ermitteln, was wiederum zur Ermittlung des Kipppunkts des Krans nutzbar ist.

Eine Möglichkeit zur Messung der Stützkräfte besteht darin, im Kraftfluss jedes Abstützelements einen Kraftaufnehmer zu positionieren. Dieser Kraftaufnehmer gibt dann ein der jeweiligen Stützkraft entsprechendes Signal aus, das beispielsweise in der zuvor genannten Art ausgewertet wird.

Beim Anheben des Fahrzeuges mit den Abstützelementen und beim Anheben einer Last verformen sich Fahrzeugrahmen, ausziehbare Träger und Abstützelemente dergestalt, dass sich die Enden oder Stützfüße der Abstützelemente, die auf dem Boden stehen, in horizontaler Richtung **d** voneinander entfernen wollen, wie in Abb. 2 gezeigt ist. Diese Bewegung wird aber teilweise dadurch verhindert, dass der Reibwert zwischen Boden und Stützfuß **a** nicht Null ist. Dadurch bauen sich horizontale Reaktionskräfte zwischen den Abstützelementen auf, die in allen vom Kraftfluss durchlaufenen Bauteilen Biegemomente erzeugen.

Das messtechnische Problem besteht nun darin, dass jeder reale Kraftaufnehmer oder -sensor nicht nur in der Kraftrichtung reagiert, für die er konstruiert ist, sondern mehr oder weniger auch auf Kräfte und Momente in allen anderen Richtungen, die auf ihn einwirken. Um beispielsweise die Schwerpunktlage des mit den Abstützelementen abgestützten Fahrzeugs oder Krans zu erfassen sind aber lediglich die vertikalen Kräfte, die Stützkräfte relevant.

Die in zuvor beschriebener Anwendung auftretenden horizontalen Kräfte, die an den einzelnen Abstützelementen, betragen bis zu 20 % der zu messenden vertikalen Kräfte.

Je weiter die Kraftaufnehmer vom Ende der Stützen am Boden weg platziert werden, desto höher werden aufgrund des Biegemomentenverlaufs in den belasteten Teilen die Biegemomente. Deshalb ist es sinnvoll, die Kraftaufnehmer möglichst nah an dem bodenseitigen Ende der Abstützelemente anzuordnen. In diesem Bereich ist die Verschmutzung der Abstützelemente besonders groß und könnte empfindliche Messtechnik beschädigen.

Als weiterer Stand der Technik zeigt die DE 199 60 786 A1 in einem Ausführungsbeispiel einen rotationssymmetrischen Radialkraftaufnehmer, der aus zwei spiegelbildlichen Aufnehmerscheiben besteht, bei denen jeweils ein Verformungskörper mit daran applizierten Dehnungsmessstreifen über ringförmige elastische Stege mit jeweiligen Krafteinleitungselementen und jeweiligen Kraftaufnahmeelementen verbunden ist. Die Aufnehmerscheiben sind dabei in einer Ebene angeordnet, die parallel zur Hauptmessrichtung ausgerichtet ist, so dass in dem Radialkraftaufnehmer ein radialkraftabhängiges und radialkraftmomentunabhängiges Biegemoment eingeleitet wird.

Als weiterer Stand der Technik ist aus der US 3 130 578 A eine Dehnungssensorbrückenschaltung mit temperaturempfindlichen Elementen bzw. Thermowiderständen bekannt. Weiterhin beschreibt die EP 0 338 325 A1 eine ringförmige Ringtorsions-Kraftmessvorrichtung mit einem scheibenartigen Verformungskörper, an dem Dehnungsmessstreifen angebracht sind, wobei die zu messende Kraft senkrecht zu der Erstreckungsebene des Verformungskörpers eingeleitet wird.

Ferner zeigen die nachfolgenden Dokumente eine Überlastsicherung für einen Kran mit in Dünnschichttechnologie auf einen Trägerkörper aufgebrachten Messwiderständen. Der Kraftaufnehmer kann ein quaderförmiges Element sein, oder es ist eine Gestaltung als zylindrische Messachse beschrieben.

| | |
|---|---|
| Veröffentlichung: | Hartmut Fürniß ET AL: "Überlastsicherung basierend auf Dünnfilmtechnologie", |
| | 17. Kranfachtagung, Technische Universitaet Dresden 77) 17. KRANFACHTAGUNG Krane -wirtschaftliche Aspekte und Entwicklungstendenzen 27. März 2009 Einladung und Programm, |
| | Bd. 17, 1. Januar 2009 (2009-01-01), Seiten 77-84, XP055199344, ISBN: 978-3-86-780113-3 |
| Veröffentlichung: | "Programm 17. KRANFACHTAGUNG dresden wirtschaftliche Aspekte und Entwicklungstendenzen 27. März 2009 Einladung und Programm", 27. März 2009 (2009-03-27), Seite 4 pp., XP055199358, Gefunden im Internet: URL: http://www.kranfachtagung.de/archiv/2009-dresden/?file=tl_files/lehnert/pdf/Dresden-2009/Progr_kft_17_1.pdf [gefunden am 2015-07-01] |

Aufgabe der Erfindung ist es, einen robusten Kraftaufnehmer für ein Abstützelement vorzuschlagen, der ein der von dem Abstützelement getragenen Last, der Stützkraft, entsprechendes Signal liefert.

Diese Aufgabe wird mit einem Abstützelement für ein Fahrzeug mit einem Kraftaufnehmer mit den Merkmalen des Anspruchs 1 gelöst.

Vorteilhafte Ausgestaltungen der Erfindung sind in den Unteransprüchen aufgezeigt.

Erfindungsgemäß ist der Kraftaufnehmer so gestaltet, dass er an das Ende der Stütze montiert ist, wenig Beeinflussung durch Querkräfte und Momente erfährt und den Umwelteinflüssen wie Feuchtigkeit und Schmutz gut widerstehen kann.

Da es sich bei der hier beschriebenen Applikation um eine sicherheitsrelevante Anwendung handelt, ist es außerdem wichtig, dass die messtechnischen Eigenschaften des Kraftaufnehmers über lange Zeit gleich bleiben und die Mindestanforderungen an die Funktionssicherheit erfüllt werden.

Ferner sind solche mit Stützfüßen ausgerüsteten Fahrzeuge in der Regel im Freien im Einsatz. Dort kann bspw. eine Fahrzeugseite in der Sonne stehen, so dass die Stützfüße auf dieser Seite erwärmt werden, während die anderen Stützfüße im Schatten sind. Dadurch können sich erhebliche Temperaturunterschiede ergeben, die die gemessenen Widerstandswerte (also Kräfte) in dem Kraftaufnehmer verfälschen können.

Vorteilhafterweise kann der Kraftaufnehmer zusätzliche temperaturempfindliche Widerstände tragen, die eine Temperaturkompensation unmittelbar am Kraftaufnehmer ermöglichen. Besonders vorteilhaft ist es, wenn der die Lastmesswiderstände tragende Sensor auch die Temperaturmesswiderstände unmittelbar daneben hat. Es gibt eine Vielzahl verschiedener Fahrzeuge mit Anbauten, die den Einsatz von Stützfüßen erfordern. Folglich sind auch verschiedene maximale Stützlasten an den Stützfüßen zu erwarten und zu erfassen. Um eine genaue Messung über den jeweiligen Nennlastbereich zu ermöglichen, sollte der Kraftaufnehmer so ausgelegt sein, dass er möglichst ein
sich im gesamten Nennlastbereich gleichmäßig änderndes Signal abgeben kann.

Um die Bevorratung einer Vielzahl verschiedener Sensoren, die jeweils für einen Nennlastbereich angepasst sind, zu vermeiden, ist es vorteilhaft, wenn ein einziger Standardsensor verwendet wird und der Verformungskörper des Kraftaufnehmers in seiner Geometrie der Messaufgabe, d.h. dem Nennlastbereich angepasst ist. Diese Anpassung über die Gestalt des Verformungskörpers ist sehr gut zu berechnen und auch zu fertigen, da vorzugsweise Durchmesser eines Drehteils (Zylinderdurchmesser) angepasst werden, was leicht und genau in der Praxis umzusetzen ist.

Ausführungsformen der Erfindung sind nachfolgend unter Bezugnahme auf die schematisierten Zeichnungen näher beschrieben.

In den Zeichnungen zeigt:
Abb. 1 einen von Abstützelementen angehobenen Kranwagen in Frontansicht und Seitenansicht;
Abb. 2 schematisch die auftretenden Verformungen;
Abb. 3 einen Verformungskörper als Messabschnitt eines Abstützelements;
Abb. 4 einen an dem Verformungskörper gemäß Abb.3 anzuschweißenden Trägerkörper mit Dünnfilmwiderständen darauf;
Abb. 5 eine beispielhafte Schaltung der Dünnfilmwiderstände;
Abb. 6 eine Schnittansicht zu Darstellung eines Details des Verformungskörpers;
Abb. 7 eine Diagramm zur Erläuterung des Zusammenhangs von Dehnung und Signal einzelner Dünnfilmwiderstände;
Abb. 8 eine weitere, beispielhafte Schaltung der Dünnfilmwiderstände;
Abb. 9 noch eine beispielhafte Schaltung der Dünnfilmwiderstände;
Abb. 10 eine schematische Schnittansicht eines Verformungskörpers mit Biegelinien; und
Abb. 11 eine Skizze zur Erläuterung der Anpassung des Verformungskörpers an die Messaufgabe.

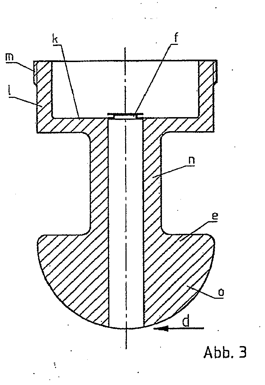

Gemäß Abb. 3 hat der Kraftaufnehmer einen rostbeständigen, stählernen Verformungskörper **e**, dessen durch die zu messende Kraft hervorgerufene Dehnung nicht mit auf den Körper aufgeklebten Dehnungsmessstreifen, sondern mit Hilfe von in Dünnschichttechnik hergestellten dehnungsempfindlichen Widerständen erfasst wird. Das hat den Vorteil großer Langzeitstabilität, da die in Dünnschichttechnik hergestellten Dünnfilmwiderstände nicht aufgeklebt werden, sondern stoffschlüssig als atomarer Verbund auf einen Trägerkörper aufgesputtert werden.

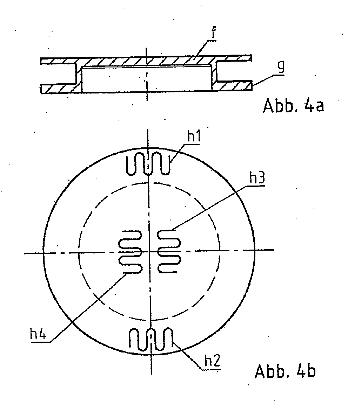

Gemäß Abb. 4a, 4b befinden sich die Dünnfilmwiderstände auf der Stirnfläche des vorerst vom Kraftaufnehmer getrennten, flachen, zylindrischen Trägerkörpers **f**, dessen Werkstoff dem Werkstoff des Verformungskörpers entspricht oder zumindest eine ähnliche Wärmeausdehnung aufweist. Der Trägerkörper wird während des Fertigungsprozesses des Kraftaufnehmers mit Hilfe eines Schweißlasers oder durch Elektronenstrahlschweißen an seinem äußeren Rand **g** stoffschlüssig mit dem Verformungskörper verbunden.

Die Anzahl der Dünnfilmwiderstände **h** auf dem Trägerkörper beträgt mindestens zwei, im ausgeführten Beispiel vier. Diese sind zu einer Wheatstone-Brücke **i** verschaltet.

Zum Erreichen einer höheren Funktionssicherheit können sich auch zwei oder mehr gleichartig verschaltete Wheatstone-Brücken auf dem Trägerkörper befinden, deren Signale getrennt voneinander ausgewertet und in einer elektronischen Vergleicherschaltung bewertet werden.

Weiterhin befinden sich temperaturabhängige Widerstände direkt auf dem Trägerkörper, mit deren Hilfe es ermöglicht wird, sowohl den Temperatureinfluss auf den Nullpunkt des Ausgangssignals **i**, als auch auf die Spanne des Ausgangssignals **i** zu kompensieren. Die örtlich sehr nahe Lage dieser Widerstände zu den Dünnfilmwiderständen erzeugt eine schnelle Kompensation bei Temperaturänderungen.

Die Position des Trägerkörpers innerhalb des Verformungskörpers ist so gewählt, dass sich bei Beanspruchung des Kraftaufnehmers durch die oben genannten horizontalen Kräfte **d** und dadurch entstehenden Momente kein störender Messeffekt einstellt. Dies wird dadurch gelöst, dass sich die auch in den Trägerkörper übertragenden Dehnungen und damit Widerstandsänderungen in den Dünnfilmwiderständen durch die elektrische Verschaltung in der Brückenschaltung auslöschen. Allein bei vertikaler Beanspruchung des Kraftaufnehmers entsteht ein zu messender Effekt.

Die hier bevorzugte Ausführungsform des Verformungskörpers ist in der Grundform eine scheibenförmige Membran **k**, in deren Mittelpunkt sich eine zylindrische Bohrung befindet, in der sich der zylindrische Trägerkörper **f** befindet. Der Außenrand der Membran geht in einen Hohlzylinder **1** über, an dessen äußerem Ende vorzugsweise ein Gewinde **m** angebracht ist, welches die Befestigung an dem Abstützelement erlaubt. Der Innenrand der Membran ist zu einem dickwandigen, langen Hohlzylinder **n** ausgeformt, dessen Ende vorzugsweise in einer halbkugelförmigen Verdickung **o** endet, die es erlaubt, den Stützfuß, der die Verbindung zum Boden herstellt, in beliebigen Winkelstellungen zu montieren, was bei Bodenunebenheiten erforderlich ist.

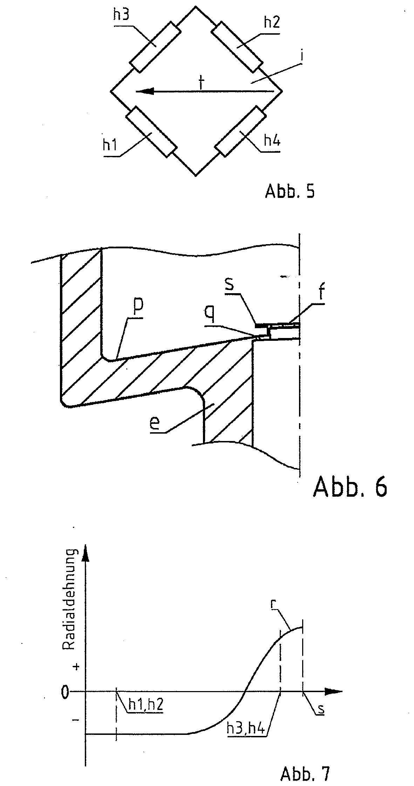

Wie in Abb. 6 gezeigt ist, bewirkt vertikal wirkende Kraft die Absenkung des Membranaußenrandes **p** gegenüber dem Innenrand **q** und führt zu rotationssymmetrisch gleich verteilten, radialen und tangentialen Dehnungen über den gesamten Membrandurchmesser. Diese Dehnungen pflanzen sich auch innerhalb des Trägerkörpers **f** fort und führen dort zu entsprechenden radialen und tangentialen Dehnungen, die über die Dünnfilmwiderstände **h** in die elektrische Signaländerung **t** umgewandelt werden.

Zwei der vier Dünnfilmwiderstände (vgl. Abb. 4b) **h1** und **h2** befinden sich in der Nähe des äußeren Rands **s** der Stirnfläche des Trägerkörpers **f** und werden bei Beaufschlagung mit vertikaler Kraft gedehnt, so dass sich ihr Widerstand erhöht. Die zwei anderen Dünnfilmwiderstände **h3** und **h4** befinden sich Nahe am Zentrum des Trägerkörpers **f** und werden bei Beaufschlagung mit vertikaler Kraft gestaucht, so dass sich ihr Widerstand verringert.

Der prinzipielle Radialdehnungsverlauf **r** und die Verformung im Trägerkörper sind in Abb. 7 dargestellt.

Die Zusammenschaltung der Widerstände zur Wheatstone-Brücke ist in der Abb. 5 gezeigt.

Eine über den Stützfuß in den Kraftaufnehmer eingeleitete horizontale Kraft führt zu einer Verformung von Membran und Trägerkörper. Im Unterschied zu den Dehnungen, die bei Beaufschlagung mit vertikaler Kraft entstehen, erfahren die Orte, an denen die beiden äußeren Dünnfilmwiderstände sitzen, nun zueinander entgegengesetzte Dehnungen und die beiden Orte, an denen die beiden inneren Dünnfilmwiderstände sitzen, auch.

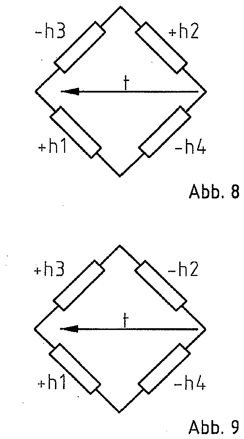

Eine beispielhafte Anordnung der Dünnfilmwiderstände auf dem Trägerkörper zeigt Abb. 4b. Diese jeweils gleich großen, aber gegensinnigen Dehnungsänderungen bewirken, dass sich am Ausgang der Wheatstone-Brücke keine Spannungsänderung **t** ergibt und damit kein Messfehler aus horizontalen Kräften und dadurch erzeugten Momenten entsteht. Die Richtung der Veränderung des Widerstands der Dünnfilmwiderstände der Wheatstone-Brücke ist für diesen Fall in Abb. 9 prinzipiell über die Zeichen "+" und "-" dargestellt. Die Richtung der Veränderung des Widerstands der Dünnfilmwiderstände der Wheatstone-Brücke bei Belastung mit vertikaler Last ist in Abb. 8 prinzipiell über die Zeichen "+" und "-" dargestellt.

Je nach Richtung der horizontalen Kräfte ergeben sich mehr oder weniger große, paarweise Veränderungen der Dünnfilmwiderstände **h1, h2** und **h3**, **h4**. Sie sind aber im Falle der störenden Horizontalkräfte immer gegensinnig gerichtet, sodass sich keine Änderung des Brückenausgangsignals **t** ergibt.

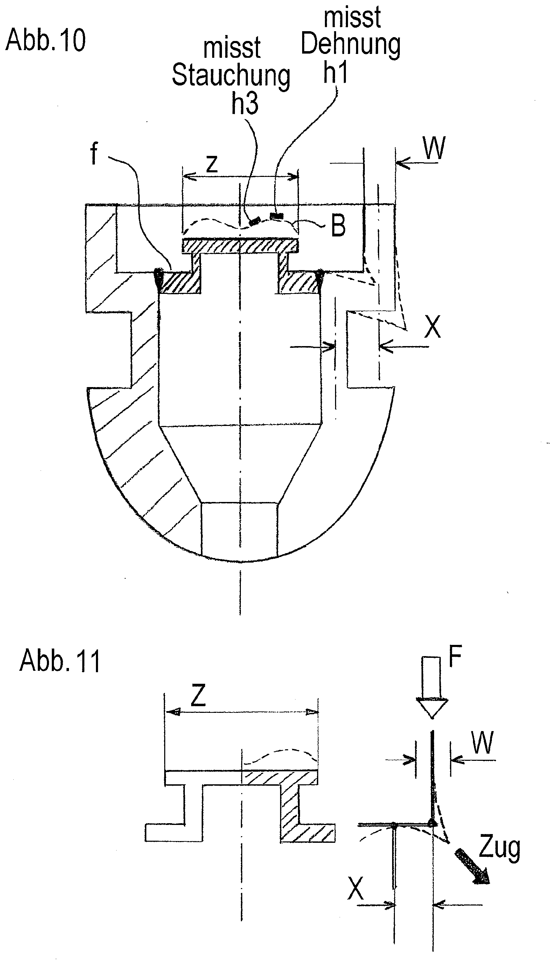

Abb. 10 zeigt eine schematische Schnittansicht eines Verformungskörpers e mit einem darin eingeschweißten Trägerkörper **f**. Der Trägerkörper **f** symbolisiert hierin ein Sensorelement, das auch ein vollständig anschlussfertiges Element sein kann, das an der Schweißnaht **v** in den Verformungskörper **e** eingeschweißt ist.

Eine Biegelinie **B** zeigt in überzeichneter Weise die Verformung des Trägerkörpers **f**, wenn der Verformungskörper **e** belastet wird. Ein auf einer Kuppe der Biegelinie **B** befindlicher Widerstand **h1** misst die Drehung des Trägerkörpers **f**, während ein in einer Senke der Biegelinie **B** befindlicher Widerstand **h3** eine Stauchung misst. Aus diesen Verformungswerten kann auf die gesamte Belastung des Verformungskörpers e geschlossen werden.

Soll nun ein stets baugleiches Sensorelement als ein Standard-Sensorelement für Kraftaufnehmer für verschiedene Nennlasten eingesetzt werden, so kann unter Zuhilfenahme des in Abb. 11 gezeigten Modells durch Änderung der Wandstärke **W** und des Hebelarms **X,** während **Z** konstant ist, der Verformungskörper **e** so bemessen werden, dass der Messbereich des Standard-Sensorelements ausgeschöpft wird. Der Messbereich des Standard-Sensorelements soll dabei so ausgeschöpft werden, dass das Sensorelement sein maximales Signal abgibt, wenn der Verformungskörper mit der Nennlast belastet wird. Auf diese Weise kann durch eine geeignete Festlegung von **W** und **X** über den gesamten Betriebslastbereich des jeweiligen Kraftsensors ein Signal mit einer zumindest nahezu maximalen Auflösung erhalten werden.

Durch die Verwendung von nur einem stets baugleichen Standard-Sensorelement (das auch als bereits anschlussfertiges Bauteil lagernd vorgehalten werden kann) und die rein mechanische Anpassung an die jeweilige Messaufgabe des Kraftaufnehmers kann schnell und kostengünstig auf Nennlastvorgaben reagiert werden.

Zudem ist das Standard-Sensorelement in seinem gesamten Verhalten in dem Anwendungsbereich (d.h. das Ausmaß der Verformungen ist immer gleich; die Verformung geschieht nur bei anderer Last) sehr gut bekannt, so dass keine weiteren physikalischen Störgrößen berücksichtigt werden müssen, die zu erwarten wären, wenn man den Sensor änderte.

Auf die geschilderte Weise kann das Standard-Sensorelement in Nennlastbereichsverhältnissen von 1:20 verwendet werden, d.h. es können Kraftaufnehmer mit Nennlasten von 300kN bis hin zu Kraftaufnehmern mit 6000kN Nennlast bereitgestellt werden.

In dieser Beschreibung ist ein Kraftaufnehmer für ein Abstützelement beschrieben, der zur Erfassung der von dem Abstützelement zum Tragen einer Last übertragenen Stützkraft dient. Der Kraftaufnehmer hat einen sich unter der Stützkraft und Querkräften in einer von der Stützkraft abweichenden Richtung verformenden Messabschnitt oder Verformungskörper mit dem er einen Teil des Abstützelements bildet. Es sind mehrere, an dem Messabschnitt angeordnete Dünnfilmwiderstände fest mit dem Messabschnitt verbunden, die eine dehnungsproportionale Reaktion zeigen und deren querkraftproportionale Reaktionen einander aufheben. Die Auslöschung der Reaktionen kann durch geeignete Anordnung der Dünnfilmwiderstände an dem Messabschnitt oder durch entsprechende Verarbeitung der gemessenen Signale erfolgen.

Die Anpassung von Kraftaufnehmern an verschiedene Messaufgaben und Nennlasten bei Verwendung eines Standard-Sensorelements ist beschrieben.

## Patentansprüche

1. Abstützelement (a) für ein Fahrzeug, mit einem Kraftaufnehmer zur Erfassung der von dem Abstützelement zum Tragen einer Last übertragenen Stützkraft,
**dadurch gekennzeichnet, dass** der Kraftaufnehmer einen sich unter der Stützkraft und Querkräften in einer von der Stützkraft abweichenden Richtung verformenden Messabschnitt (p) des Abstützelements bildet, wobei der Messabschnitt ein membranartiges Verformungsstück in Form einer scheibenförmigen Membran (k) mit einer zylindrischen Bohrung in ihrem Mittelpunkt aufweist, an die sich zu einer Seite am äußeren Membranrand (p) ein Hohlzylinder (I) anschließt und an die sich zur anderen Seite am innerem Membranrand (q) ein Hohlzylinder (e) oder ein Vollzylinder anschließt, und
mehrere an dem Messabschnitt angeordnete Dünnfilmwiderstände (h1, h2, h3, h4) hat, die eine dehnungsproportionale Reaktion zeigen und deren querkraftproportionale Reaktionen einander aufheben, wobei an dem Messabschnitt ein Trägerkörper (f) angeschweißt ist, auf dem die Dünnfilmwiderstände auf der Stirnfläche als Dünnschichtwiderstände in einer monolithisch auf dem Trägerkörper (f) aufgebrachten Schicht ausgebildet sind, und wobei der sich an dem inneren Membranrand (q) anschließende Hohl- oder Vollzylinder (e) in einer halbkugelförmigen Verdickung (o) endet, die es erlaubt, einen Stützfuß (a), der die Verbindung zum Boden herstellt, in verschiedenen Winkelstellungen zu montieren.

2. Abstützelement nach Anspruch 1, **dadurch gekennzeichnet, dass** die Dünnfilmwiderstände mit einer Auswerteeinheit verbunden sind, die die Widerstände der einzelnen Dünnfilmwiderstände erfasst und ein der Änderung jedes Dünnfilmwiderstands entsprechendes Signal erzeugt.

3. Abstützelement nach Anspruch 2, **dadurch kennzeichnet, dass** die Auswerteeinheit Signale, die gemessenen Querkräften zuzuordnen sind, entsprechend ihrem Vorzeichen miteinander verrechnet.

4. Abstützelement nach Anspruch 1, 2 oder 3, wobei die Dünnfilmwiderstände so auf dem Messabschnitt angeordnet sind, dass sie bei Querkraft und Momentenbelastung jeweils paarweise gegensinnig gedehnt werden.

5. Abstützelement nach Anspruch 4, wobei die Dünnfilmwiderstände so auf dem Messabschnitt angeordnet sind, dass sie bei Querkraft und/oder Momentenbelastung jeweils paarweise gegensinnig und betragsmäßig gleich viel gedehnt werden.

6. Abstützelement nach Anspruch 1, wobei der Messabschnitt in einem Verformungskörper (e) vorgesehen ist, der aus einem korrosionsbeständigen Werkstoff besteht.

7. Abstützelement nach einem oder mehreren der Ansprüche 1 bis 6, wobei die Dünnschichtwiderstände in Form von mehreren, gleichartigen Wheatstone-Brücken (i) verschaltet sind, deren Ausgangssignale (t) getrennt ausgewertet werden und über eine elektronische Vergleicherschaltung bewertet werden.

8. Abstützelement nach einem oder mehreren der Ansprüche 1 bis 7, wobei auf dem Trägerkörper (f) aufgebrachte temperaturempfindliche Widerständen vorgesehen sind, die den Einfluss der Temperatur auf den Nullpunkt und die Spanne des Ausgangssignals (t) kompensieren.

9. Abstützelement nach einem oder mehreren der vorhergehenden Ansprüche 1 bis 8, **dadurch gekennzeichnet, dass** der Trägerkörper (f) mit darauf aufgebrachten Dünnschichtwiderständen (h1, h2, h3, h4) ein anschlussfertiges Standard-Sensorelement mit einem Einschweißflansch (g) bildet, das in einen Verformungskörper eingeschweißt ist.

10. Abstützelement nach Anspruch 9, **dadurch gekennzeichnet, dass** der Trägerkörper (f) des Standard-Sensorelements temperaturempfindliche Widerstände trägt.

11. Abstützelement nach Anspruch 9 oder 10, **dadurch gekennzeichnet, dass** der Verformungskörper ausgelegt ist, sich unter einer vorgegebenen Nennlast derart zu verformen, dass das Standard-Sensorelement ein Signal vorbestimmter Größe abgibt.

12. Abstützelement nach Anspruch 11, **dadurch gekennzeichnet, dass** baugleiche Standart-Sensorelemente in verschieden bemessenen Verformungskörpern einsetzbar sind, um Abstützelemente für verschiedene Nennlastbereiche bereitzustellen.

13. Abstützelement nach Anspruch 11 oder 12, **dadurch gekennzeichnet, dass** durch die Auslegung des Verformungskörpers die Durchmesser (X) oder Wandstärken (W) der beiden sich an das membranartige Verformungsstück anschließenden Zylinder angepasst sind.

14. Abstützelement nach Anspruch 11, 12 oder 13, **dadurch gekennzeichnet, dass** mit dem baugleichen Standard-Sensorelement unter Verwendung angepasster Verformungskörper Abstützelemente für Nennlasten von 300 bis 6000 kN bereitstellbar sind.

15. Abstützelement nach einem oder mehreren der vorhergehenden Ansprüche, das zum Einbau in einen mobilen Kran, ein Hebezeug, ein Bohrfahrzeug, oder eine Selbstfahrlafette angepasst ist.

## Claims

1. Support element (a) for a vehicle, having a force transducer for measuring the support force transmitted from the support element in order to carry a load,
**characterized in that** the force transducer forms a measuring portion (p) of the support element that deforms under the support force and transverse forces in a direction deviating from the support force, wherein the measuring portion has a diaphragm-like deformation piece in the form of a disc-shaped diaphragm (k) with a cylindrical hole in its centre, which is adjoined on one side on the outer diaphragm edge (p) by a hollow cylinder (1), and which is adjoined on the other side on the inner diaphragm edge (q) by a hollow cylinder (e) or a solid cylinder, and
has a plurality of thin film resistors (h1, h2, h3, h4) arranged on the measuring portion, which indicate a reaction proportional to strain and of which the reactions proportional to transverse forces cancel out one another, wherein a carrier member (f) is welded onto the measuring portion, on which the thin film resistors are formed on the end face as thin film resistors in a layer applied monolithically to the carrier member (f), and wherein the hollow or solid cylinder (e) adjoining the inner diaphragm edge (q) ends in a hemispherical thickening (o), which permits a supporting foot (a), which produces the connection to the ground, to be mounted in various angular positions.

2. Support element according to Claim 1, **characterized in that** the thin film resistors are connected to an evaluation unit, which measures the resistances of the individual thin film resistors and generates a signal corresponding to the change in each thin film resistor.

3. Support element according to Claim 2, **characterized in that** the evaluation unit balances signals, which are to be assigned to measured transverse forces, with each other in accordance with their sign.

4. Support element according to Claim 1, 2 or 3, wherein the thin film resistors are arranged on the measuring portion in such a way that they are each strained in opposite directions in pairs under transverse force and instantaneous loading.

5. Supporting element according to Claim 4, wherein the thin film resistors are arranged on the measuring portion in such a way that they are each strained in opposite directions in pairs and to the same extent in terms of magnitude under transverse force and/or instantaneous loading.

6. Support element according to Claim 1, wherein the measuring portion is provided in a deformation member (e) which consists of a corrosion-resistant material.

7. Support element according to one or more of Claims 1 to 6, wherein the thin film resistors are wired up in the form of a plurality of identical Wheatstone bridges (i), the output signals (t) from which are evaluated separately and are assessed via an electronic comparison circuit.

8. Support element according to one or more of Claims 1 to 7, wherein temperature-sensitive resistors applied to the carrier member (f) are provided, which compensate for the influence of the temperature on the zero point and the range of the output signal (t).

9. Support element according to one or more of the preceding Claims 1 to 8, **characterized in that** the carrier member (f) with thin film resistors (h1, h2, h3, h4) applied thereto forms a standard sensor element that is ready to connect and has a weld-in flange (g), which is welded into a deformation member.

10. Supporting element according to Claim 9, **characterized in that** the carrier member (f) of the standard sensor element carries temperature-sensitive resistors.

11. Support element according to Claim 9 or 10, **characterized in that** the deformation member is designed to deform under a predefined nominal load in such a way that the standard sensor element outputs a signal of predetermined size.

12. Support element according to Claim 11, **characterized in that** standard sensor elements of the same design can be used in deformation members of different dimensions in order to provide support elements for various nominal load ranges.

13. Support element according to Claim 11 or 12, **characterized in that**, by means of the design of the deformation member, the diameters (X) or wall thicknesses (W) are matched to the two cylinders adjoining the diaphragm-like deformation piece.

14. Supporting element according to Claim 11, 12 or 13, **characterized in that** by using the standard sensor element of identical design, support elements for nominal loads from 300 to 6000 kN can be provided by using matching deformation members.

15. Support element according to one or more of the preceding claims, which is adapted to installation in a mobile crane, a hoist, a drilling vehicle or a self-propelled gun carriage.

## Revendications

1. Élément d'appui (a) pour un véhicule, comprenant un capteur d'effort destiné à détecter la force d'appui transmise par l'élément d'appui pour supporter une charge,
**caractérisé en ce que** le capteur d'effort forme une portion de mesure (p) de l'élément d'appui qui se déforme sous la force d'appui et des forces transversales dans une direction différente de celle de la force d'appui, la portion de mesure possédant une pièce de déformation de type membrane sous la forme d'une membrane (k) en forme de disque pourvue d'un perçage cylindrique en son centre, à laquelle vient se rattacher un cylindre creux (1), d'un côté sur le bord extérieur de la membrane (p), et à laquelle vient se rattacher un cylindre creux (e) ou un cylindre plein, de l'autre côté sur le bord intérieur de la membrane (q), et
possède plusieurs résistances à film mince (h1, h2, h3, h4) disposées au niveau de la portion de mesure, lesquelles présentent une réaction proportionnelle à l'allongement et dont les réactions proportionnelles à la force transversale s'annulent mutuellement, un corps porteur (f) étant fixé par soudage à la portion de mesure, sur lequel les résistances à film mince sont formées sur la face frontale sous la forme de résistances en couche mince dans une couche appliquée de manière monolithique sur le corps porteur (f), et le cylindre creux ou plein (e) qui vient se rattacher sur le bord intérieur de la membrane (q) se terminant en un épaississement (o) en forme de demi-sphère qui permet de monter un pied d'appui (a), lequel établit la liaison avec le sol, dans différentes positions angulaires.

2. Élément d'appui selon la revendication 1, **caractérisé en ce que** les résistances à film mince sont reliées à une unité d'interprétation qui détecte les résistances de chacune des résistances à film mince et génère un signal correspondant à la variation de chaque résistance à film mince.

3. Élément d'appui selon la revendication 2, **caractérisé en ce que** l'unité d'interprétation compense les uns avec les autres les signaux qui sont à associer aux forces transversales mesurées conformément à leur signe.

4. Élément d'appui selon la revendication 1, 2 ou 3, **caractérisé en ce que** les résistances à film mince sont disposées sur la portion de mesure de telle sorte qu'elles s'allongent respectivement en sens inverse par paires lors d'une force transversale et d'une contrainte de moment.

5. Élément d'appui selon la revendication 4, **caractérisé en ce que** les résistances à film mince sont disposées sur la portion de mesure de telle sorte qu'elles s'allongent respectivement en sens inverse par paires et de la même amplitude lors d'une force transversale et/ou d'une contrainte de moment.

6. Élément d'appui selon la revendication 1, la portion de mesure se trouvant dans un corps de déformation (e) qui se compose d'un matériau résistant à la corrosion.

7. Élément d'appui selon l'une ou plusieurs des revendications 1 à 6, les résistances à film mince étant interconnectées sous la forme de plusieurs ponts de Wheatstone (i) du même type dont les signaux de sortie (t) sont interprétés séparément et sont évalués par le biais d'un circuit comparateur électronique.

8. Élément d'appui selon l'une ou plusieurs des revendications 1 à 7, des résistances sensibles à la température étant appliquées sur le corps porteur (f), lesquelles compensent l'influence de la température sur le point zéro et l'ampleur du signal de sortie (t).

9. Élément d'appui selon l'une ou plusieurs des revendications 1 à 8, **caractérisé en ce que** le corps porteur (f) avec les résistances à film mince (h1, h2, h3, h4) appliquées sur celui-ci forme un élément capteur standard prêt au branchement pourvu d'une bride de soudage (g), lequel est intégré par soudage dans un corps de déformation.

10. Élément d'appui selon la revendication 9, **caractérisé en ce que** le corps porteur (f) de l'élément capteur standard comporte des résistances sensibles à la température.

11. Élément d'appui selon la revendication 9 ou 10, **caractérisé en ce que** le corps de déformation est conçu pour se déformer sous une charge nominale prédéfinie de telle sorte que l'élément capteur standard délivre un signal ayant une grandeur prédéfinie.

12. Élément d'appui selon la revendication 11, **caractérisé en ce que** des éléments capteurs standard de construction identique peuvent être utilisés dans des corps de déformations de différentes dimensions afin de fournir des éléments d'appui pour différentes plages de charges nominales.

13. Élément d'appui selon la revendication 11 ou 12, **caractérisé en ce que** le diamètre (X) ou les épaisseurs de paroi (W) des deux cylindres qui se rattachent à la pièce de déformation de type membrane sont adaptés par la conception du corps de déformation.

14. Élément d'appui selon la revendication 11, 12 ou 13, **caractérisé en ce que** des éléments d'appui pour des charges nominales de 300 à 6000 kN peuvent être réalisés avec l'élément capteur standard de construction identique en utilisant des corps de déformation adaptés.

15. Élément d'appui selon l'une ou plusieurs des revendications précédentes, lequel est adapté pour être monté dans une grue mobile, un engin de levage, un véhicule de forage ou un canon automoteur.
